Europäisches Patentamt

European Patent Office

Office européen des brevets

(19)

(11) **EP 0 900 154 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(21) Anmeldenummer: **98907889.4**

(22) Anmeldetag: **11.02.1998**

(51) Int Cl.⁷: **B60K 41/14**

(86) Internationale Anmeldenummer:
**PCT/DE98/00372**

(87) Internationale Veröffentlichungsnummer:
**WO 98/42531 (01.10.1998 Gazette 1998/39)**

(54) **VORRICHTUNG UND VERFAHREN ZUR STEUERUNG EINES CVT BEI EINEM KRAFTFAHRZEUG**

DEVICE AND METHOD FOR CONTROLLING A CVT IN A MOTOR VEHICLE

DISPOSITIF ET PROCEDE POUR COMMANDER UNE TRANSMISSION A CHANGEMENT DE VITESSES CONTINU DANS UN VEHICULE A MOTEUR

(84) Benannte Vertragsstaaten:
**DE FR IT**

(30) Priorität: **26.03.1997 DE 19712713**

(43) Veröffentlichungstag der Anmeldung:
**10.03.1999 Patentblatt 1999/10**

(73) Patentinhaber: **ROBERT BOSCH GMBH**
**70442 Stuttgart (DE)**

(72) Erfinder:
• **LÖFFLER, Jürgen**
  **D-71364 Winnenden (DE)**
• **BOLZ, Martin-Peter**
  **D-71720 Oberstenfeld (DE)**
• **LUH, Joachim**
  **D-74321 Bietigheim-Bissingen (DE)**
• **HÜLSER, Holger**
  **D-70329 Stuttgart (DE)**

(56) Entgegenhaltungen:
EP-A- 0 328 166        EP-A- 0 446 497
US-A- 4 577 737        US-A- 4 665 773
US-A- 5 042 325        US-A- 5 435 795

## Beschreibung

### Stand der Technik

Die Erfindung betrifft eine Vorrichtung bzw. ein Verfahren zur Steuerung eines stufenlos in seiner Übersetzung verstellbaren Getriebes bei einem Kraftfahrzeug mit den Merkmalen der Ansprüche 1 bzw. 6.

In Kraftfahrzeugen mit einem stufenlos verstellbaren Getriebe (CVT) mit Umschlingungselement (z.B. Schubgliederband oder Kette) muß die Anpreßkraft des Schubgliederbandes durch geeignete Maßnahmen so eingestellt werden, daß das zu übertragende Moment sicher übertragen werden kann. Ist die Anpreßkraft zu gering, kommt es zu hohem Schlupf zwischen dem Umschlingungselement und den Kegelscheiben (Pulleys), der zur Beschädigung führt. Ist die Anpreßkraft zu hoch, so wird der Wirkungsgrad des Getriebes zu gering, was zu einem unnötig hohen Kraftstoffverbrauch führt- Deshalb ist es günstig, die Anpreßkraft so zu wählen, daß das bei dieser Anpreßkraft maximal übertragbare Moment etwas größer ist als das aktuell zu übertragende Moment.

Bei CVT-Steuerungen, wie sie beispielsweise aus der EP,A1,0 451 887 bekannt sind, wird das Getriebeeingangsmoment aus dem vom Motor abgegebenen Drehmoment und der Verstärkung durch einen eventuell vorhandenen hydrodynamischen Wandler bestimmt. Aus diesem Moment wird eine Bandspannung berechnet, aus der eine Anpreßkraft resultiert, die eine sichere Übertragung dieses Moments ermöglicht. Da bei schnellen Änderungen des zu übertragenden Moments die Anpreßkraft wegen der Trägheit des mechanischen/hydraulischen Systems nicht schnell genug erhöht werden kann, wird in der Regel eine erhebliche Sicherheitsreserve berücksichtigt, die einen erhöhten Kraftstoffverbrauch zur Folge hat.

Die US 5,042,325, die den nächstliegenden Stand der Technit dastellt, zeigt eine CVT-Steuerung, bei der während des Betriebs das Drehmoment ermittelt wird, das das CVT-Getriebe übertragen kann. Übersteigt das Getriebeingangsmoment diesen Wert, so wird das Getriebeeingangsmoment vermindert, beispielsweise durch eine Verminderung des Motorausgangsmoments.

Die Aufgabe der vorliegenden Erfindung besteht darin, in atten Betriebs zuständen wirksame Maßnahmen gegen das Auftreten eines übermäßigen Schlupfes vorzusehen, um eine Beschädigung des Getriebes sicher zu vermeiden.

Diese Aufgabe wird durch die kennzeichnenden Merkmale der Ansprüche 1 und 6 gelöst.

### Vorteile der Erfindung

Wie erwähnt geht die Erfindung aus von einer Steuerung eines stufenlos in seiner Übersetzung verstellbaren Getriebes bei einem Kraftfahrzeug, wobei das Getriebe zusammen mit einer ein einstellbares Ausgangsmoment aufweisenden Antriebseinheit in dem Antriebsstrang des Kraftfahrzeugs angeordnet ist. Dabei sind Bestimmungsmittel zur Bestimmung einer Größe vorgesehen, die das momentan maximal übertragbare Drehmoment des Getriebes repräsentiert. Weiterhin wird durch Begrenzungsmittel das Ausgangsmoment der Antriebseinheit auf einen Grenzwert begrenzt, wobei dieser Grenzwert abhängig von der oben bestimmten Größe ermittelt wird.

Erfindungsgemäß ist vorgesehen, daß die Begrenzungsmittel derart ausgestaltet sind, daß das Ausgangsmoment der Antriebseinheit sowohl zu positiven Grenzwerten (Antriebsmomentbegrenzung) als auch zu negativen Grenzwerten (Schleppmomentbegrenzung) hin begrenzt werden kann. Das bedeutet, daß der Betrag des Ausgangsmoments der Antriebseinheit mit dem ermittelten Grenzwert verglichen wird und in Reaktion auf ein Überschreiten des Grenzwertes das Ausgangsmoment der Antriebseinheit im Sinne einer Unterschreitung des Grenzwertes vermindert (Antriebsmomentbegrenzung) oder erhöht (Schleppmomentbegrenzung) wird.

Um das Getriebe sicher vor Beschädigung durch erhöhten Schlupf zu schützen, ist es also erfindungsgemäß vorgesehen, das vom Motor abgegebene Drehmoment zu begrenzen, wenn die Anpreßkraft so gering ist, daß die Gefahr eines übermäßigen Schlupfes besteht. Da das Moment des Motors im allgemeinen schneller begrenzt werden kann als die Anpreßkraft erhöht werden kann, gelangt man zu einem sicheren System, ohne eine allzu große, kraftstoffverbrauchsfördernde Sicherheitsreserve bei der Anpreßkraft vorzusehen zu müssen. Durch die Erfindung gelangt man also zu einer Erhöhung des Wirkungsgrades des Getriebes durch die Reduktion der Anpreßkraft gegenüber bestehenden Systemen ohne einen Sicherheitsverlust und damit zu einer Reduktion des Kraftstoffverbrauchs. Man erhält so eine erhöhte Sicherheit der Momentenübertragung durch das Getriebe, weil Schlupf sicher vermieden wird, was auch zu einer erhöhte Fahrsicherheit führt. Daneben wird durch die sichere Vermeidung von Schlupf die Lebensdauer des Getriebes erhöht.

In einer vorteilhaften Ausgestaltung der Erfindung ist im Antriebsstrang weiterhin ein Wandler vorgesehen, der eine bestimmbare Momentenverstärkung aufweist. In diesem Fall wird die Ermittlung des Grenzwertes abhängig von der aktuellen Wandlerverstärkung getätigt.

Ist im Antriebsstrang eine Kupplung vorgesehen, die eine bestimmbare Momentenübertragung aufweist, so wird die Ermittlung des Grenzwertes vorteilhafterweise abhängig von der aktuellen Momentenübertragung getätigt.

Wie schon eingangs erwähnt weist ein Umschlingungsgetriebe im allgemeinen eine Antriebsseite sowie eine Abtriebsseite und Wirkmittel (Umschlingungselement, z.B. Schubgliederband oder Kette) zur Herstellung einer mechanischen Wirkverbindung zwischen der Antriebs- und Abtriebsseite auf. In einer vorteilhaften Ausgestaltung der Erfindung sind Erfassungsmittel vorgesehen, die eine den Anpreßdruck zwischen den Wirkmitteln und der Antrieb- und/oder Abtriebseite repräsentierende Anpreßgröße erfassen. Hierzu kann aus der hydraulische Anpreßdruck direkt gemessen werden oder aus entsprechenden Steuersignalen ermittelt werden. Die erfindungsgemäßen Bestimmungsmittel sind dann derart ausgestaltet, daß aus der erfaßten Anpreßgröße die das momentan maximal übertragbare Drehmoment des Getriebes repräsentierende Größe bestimmt wird.

Weitere vorteilhafte Ausgestaltungen der Erfindung sind den Unteransprüchen und den im folgenden beschriebenen Ausführungsbeispielen zu entnehmen.

Zeichnung

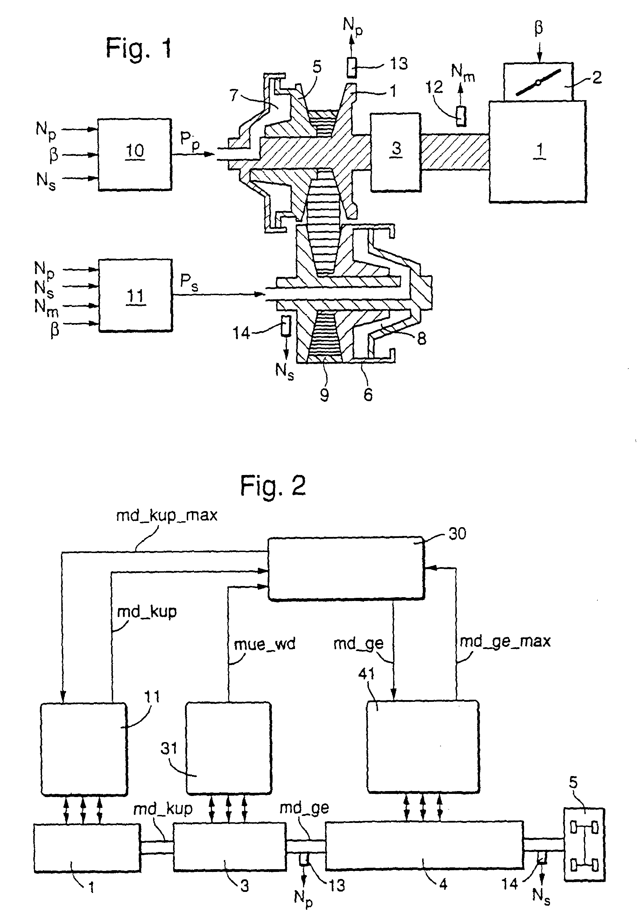

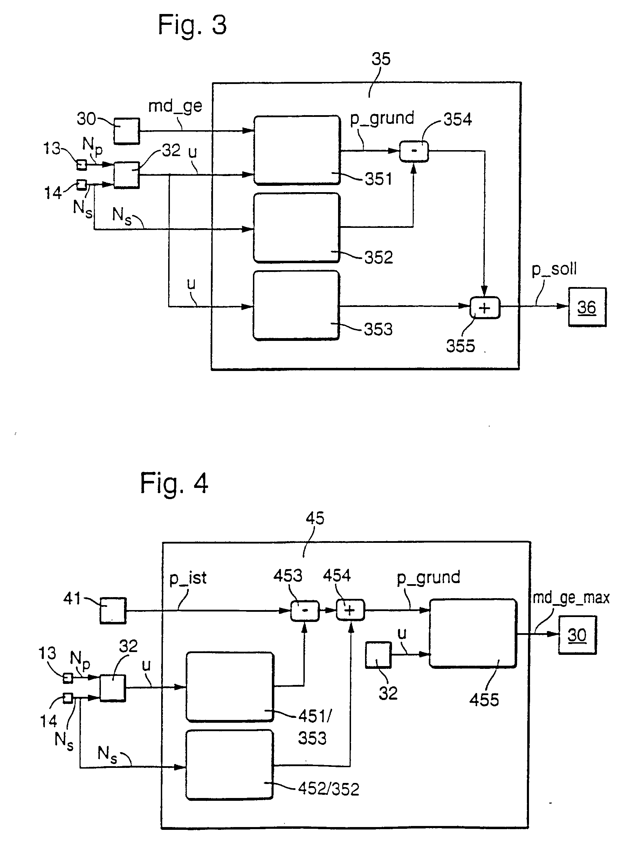

Die Figur 1 zeigt schematisch ein CVT mit einer bekannten Steuerung der Anpreßkraft, während die Figur 2 das Ausführungsbeispiel anhand eines Blockschaltbildes darstellt. Die Figuren 3 und 4 beinhalten Einzelheiten des in der Figur 2 dargestellten Blockschaltbildes.

Ausführungsbeispiel

Die Erfindung soll im folgenden anhand der Ausführungsbeispiele detailliert beschrieben werden.

In der Figur 1 ist ein bekannter Aufbau eines CVT-Getriebes im Schnitt dargestellt. Der Verbrennungsmotor 1 kann durch die Drosselklappe 2 in seinem abgegebenen Motormoment $M_m$ beeinflußt werden. Die Drosselklappe 2 ist z.B. mechanisch oder elektrisch mit dem Fahrpedal (nicht dargestellt) gekoppelt. Der Verbrennungsmotor 1 ist meist mittels einer Kupplung und/oder einem Wandler 3 an die Antriebs- (Primär-) Seite des CVT-Getriebes 4 angekoppelt. Die Abtriebs(Sekundär-) Seite des CVT-Getriebes 4 ist über ein nachgeschaltetes Getriebe (nicht dargestellt) mit den Rädern des Fahrzeugs verbunden. Das CVT-Getriebe besitzt auf der Primär- und Sekundärseite je eine axial verschiebbare Kegelscheibe 5 und 6. Zur Verstellung der übersetzung wird in den Ölkammern 7 und 8 ein entsprechender Primärdruck $P_p$ bzw. Sekundärdruck $P_s$ aufgebaut. Durch eine geeignete Wahl der Stellgrößen Primärdruck $P_p$ und Sekundärdruck $P_s$ muß gewährleistet werden, daß

1. die Getriebeübersetzung i dem gewünschten Verhältnis von Primärdrehzahl $N_p$ und Sekundärdrehzahl $N_s$ entspricht, und

2. das kraftübertragende Schubgliederband 9 (bzw. Kette, Band) ausreichend stark an die Scheiben angepreßt wird, um ein Durchrutschen des Schubgliederbandes 9 zu verhindern.

Der obengenannte Punkt 1 wird durch eine elektrohydraulische Übersetzungs- oder Primärdrehzahlregelung 10 realisiert. Für den Punkt 2 wird eine Bandspannungsregelung 11 eingesetzt.

Zur Übersetzungs- und Bandspannungsregelung sind am Motor 1 und an dem CVT-Getriebe 4 Drehzahlsensoren 12, 13 und 14 vorhanden, welche die Motordrehzahl $M_m$, die Primärdrehzahl $N_p$ und die Sekundärdrehzahl $N_s$ erfassen.

In dem häufig eingesetzten und in der Figur 1 gezeichneten Master-Slave-Prinzip dient der Sekundärdruck $P_s$ zur Einstellung der Bandspannung und der Primärdruck $P_p$ zur Einstellung der Übersetzungs- bzw. Primärdrehzahl. Bei dem alternativ möglichen Partner-Prinzip beeinflußt die Bandspannungsregelung sowohl den Primär- als auch den Sekundärdruck.

Allgemein kann man davon sprechen, daß für die Bandspannungsregelung ein Stellsignal in Form einer Druckgröße $P_B$ zur Verfügung steht. Aus der Literatur sind mehrere Verfahren zur Regelung der Bandspannung bekannt, die jedoch alle in ähnlicher Form arbeiten.

Die Figur 2 zeigt mit dem Bezugszeichen 1 den Fahrzeugmotor, der über einen Wandler 3 und einem CVT 4 mit den Fahrzeugantriebsrädern 5 verbunden ist. Das Ausgangsmoment md_kup des Motors kann mittels der Motorsteuerung bzw. mittels der Motormomentenkoordination 11 gesteuert bzw. geregelt werden. Die Momentenverstärkung mue_wd des Wandlers 3 wird im Block 31, im allgemeinen aus dem Wandlerschlupf (aus Verhältnis Motordrehzahl/Primärdrehzahl $N_p$) über ein Kennfeld, berechnet. Im Block 41 wird die erwähnte Anpreßkraft bestimmt. Zunächst wird im Block 41 aus dem aktuellen Betriebspunkt des Umschlingungselements das aktuell maximal übertragbare Drehmoment md_ge_max des Getriebes berechnet werden.

Dies kann beispielsweise einfach durch eine Inversion des in der eingangs erwähnten EP,A1,0 451 887 beschriebenen Verfahrens erfolgen, bei dem die nötige Anpreßkraft aus dem aktuellen Getriebeeingangsmoment bestimmt wird.

Verfügt der Motor 1 des Fahrzeugs über die Möglichkeit, das abgegebene Drehmoment md_kup elektronisch zu beeinflussen (z.B. durch einen Zündwinkeleingriff oder eine elektronische Motorleistungssteuerung wie E-Gas oder EDC), so kann in der Motorsteuerung 11 der Betrag des vom Motor geforderten Drehmoments auf das vom Getriebe maximal übertragbare Drehmoment md_ge_max unter Berücksichtigung der Drehmomentenverstärkung mue_wd des hydrodynamischen Wandlers 3 begrenzt werden.

Eine Reduktion des Motorausgangsmoments md_kup kann z.B. so erfolgen, wie es aus bekannten Abtriebs-Schlupf-Regelungssystemen (ASR) bekannt ist. Eine Erhöhung des Motorausgangsmoments md_kup im Falle eines zu hohen Schleppmoments (z.

B. im Schiebebetrieb des Motors) kann z.B. so erfolgen, wie es bei bekannten einer Motor-Schleppmomenten-Regelungssystemen (MSR) bekannt ist.

Zunächst wird im Momentenkoordinator 30 (Figur 2) für den Antriebsstrang aus dem Motorausgangsmoment md_kup und der Wandlerverstärkung mue_wd das Getriebeeingangsmoment md_ge berechnet:

$$md\_ge = md\_kup * mue\_wd$$

Ein Rechenblock 35 in der Steuerung 41 des Getriebes bestimmt daraus nach einem Verfahren, wie es in der Figur 3 gezeigt ist, einen Anpreßdruck p_soll. Hierzu wird das im Block 30 ermittelte Getriebeeingangsmoment md_ge und die aktuelle Getriebeübersetzung u (abhängig von den Signalen der Drehzahlsensoren 13 und 14 im Block 32 ermittelt) dem Kennfeld 351 zur Bestimmung eines Grundanpreßdrucks p_grund zugeführt. Von diesem Grunddruck wird in der Einheit 354 ein von der Getriebeausgangsdrehzahl Ns abhängiger Wert (Kennlinie Fliehkraftkorrektur 352) abgezogen. In der Einheit 355 wird dann getriebeübersetzungsabhängig ein gewisser Sicherheitszuschlag (Kennlinie Reservedruck 353) hinzuaddiert. Damit erhält man den einzustellenden Soll-Anpreßdruck p_soll.

Wird, wie in der Figur 4 dargestellt, der tatsächliche Anpreßdruck p_ist durch einen Sensor 41 gemessen, so kann daraus, quasi durch eine Inversion der in der Figur 3 beschriebenen Sollanpreßdruckermittlung, das maximal zu übertragenden Getriebeeingangsmoment md_ge_max berechnet werden. Hierzu wird der schon beschriebene Korrekturwert (Kennlinie Fliehkraftkorrektur 352) und der Sicherheitszuschlag (Kennlinie Reservedruck 353) addiert bzw. subtrahiert. Aus dem so erhaltenen Grundanpreßdruck p_grund wird abhängig von der momenten Getriebeübersetzung u mittels des Kennfeldes 455 das maximal zu übertragenden Getriebeeingangsmoment md_ge_max ermittelt.

Im Block 30 wird das maximal zu übertragenden Getriebeeingangsmoment md_ge_max durch die aktuelle Momentenverstärkung mue_wd des Wandlers dividiert, woraus man das maximale Motorausgangsmoment md_kup_max erhält. Der Momentenkoordinator Motor 11 hat nun die Aufgabe, das Motorausgangsmoment auf diesen Wert md_kup_max zu begrenzen.

Da ein Momenteneingriff am Motor 1 in der Regel erheblich schneller erfolgen kann als die Erhöhung der Anpreßkraft des Umschlingungselements, kann in diesem Fall die Sicherheitsreserve zum Schutz vor schnellen dynamischen Änderungen des Getriebeeingangsmoments geringer gewählt werden, was einen verminderten Kraftstoffverbrauch zur Folge hat.

**Patentansprüche**

1. Vorrichtung zur Steuerung eines stufenlos in seiner Übersetzung verstellbaren Getriebes (4) bei einem Kraftfahrzeug, wobei das Getriebe zusammen mit einer ein einstellbares Ausgangsmoment (md_kup) aufweisenden Antriebseinheit (1) in dem Antriebsstrang des Kraftfahrzeugs angeordnet ist, wobei

   - Bestimmungsmittel (41; 45) zur Bestimmung einer Größe (md_ge_max), die das momentan maximal übertragbare Drehmoment des Getriebes (4) repräsentiert, und
   - Begrenzungsmittel (30, 11) zur Begrenzung des Ausgangsmoments (md_kup) der Antriebseinheit (1) auf einen abhängig von der bestimmten Größe (md_ge_max) ermittelten Grenzwert (md_kup_max) derart, dass das Ausgangsmoment (md_kup) der Antriebseinheit (1) zu positiven Grenzwerten hin im Sinne einer Antriebsdrehmomentbegrenzung begrenzt werden kann, vorgesehen sind,

   **dadurch gekennzeichnet, dass**

   - die Begrenzungsmittel (30, 11) weiterhin derart ausgelegt sind, dass das Ausgangsmoment (md_kup) der Antriebseinheit (1) zu negativen Grenzwerten hin im Sinne einer Schleppmomentbegrenzung begrenzt werden kann.

2. Vorrichtung nach Anspruch 1, **dadurch gekennzeichnet, dass** im Antriebsstrang weiterhin ein Wandler (3) vorgesehen ist, der eine bestimmbare Momentenverstärkung (mue_wd) aufweist, und die Ermittlung des Grenzwertes (md_kup_max) abhängig von der aktuellen Wandlerverstärkung (mue_wd) getätigt wird.

3. Vorrichtung nach Anspruch 1, **dadurch gekennzeichnet, dass** im Antriebsstrang weiterhin eine Kupplung vorgesehen ist, die eine bestimmbare Momentenübertragung aufweist, und die Ermittlung des Grenzwertes (md_kup_max) abhängig von der aktuellen Momentenübertragung getätigt wird.

4. Vorrichtung nach Anspruch 1, **dadurch gekennzeichnet, dass** das Getriebe (4) eine Antriebsseite sowie eine Abtriebsseite und Wirkmittel (9) zur Herstellung einer mechanischen Wirkverbindung zwischen der Antriebs- und Abtriebsseite aufweist, und Erfassungsmittel (35; 41) vorgesehen sind, die eine den Anpreßdruck zwischen den Wirkmitteln (9) und der Antrieb- und/oder Abtriebseite repräsentierende Anpreßgröße (p_soll; p_ist) erfassen, und die Bestimmungsmittel (41; 45) derart ausgestaltet sind, dass aus der erfaßten Anpreßgröße (p_soll; p_ist) die das momentan maximal übertragbare Drehmoment des Getriebes (4) repräsentierende Größe (md_ge_max) bestimmt wird.

5. Vorrichtung nach Anspruch 1, **dadurch gekennzeichnet, dass** die Begrenzungsmittel (30, 11) derart ausgestaltet sind, dass der Betrag des Ausgangsmoments (md_kup) der Antriebseinheit (1) mit dem ermittelten Grenzwert (md_kup_max) verglichen wird und in Reaktion auf ein Überschreiten des Grenzwertes das Ausgangsmoment (md_kup) der Antriebseinheit (1) im Sinne einer Unterschreitung des Grenzwertes vermindert (Antriebsmomentbegrenzung) oder erhöht (Schleppmomentbegrenzung) wird.

6. Verfahren zur Steuerung eines stufenlos in seiner Übersetzung verstellbaren Getriebes (4) bei einem Kraftfahrzeug, wobei das Getriebe zusammen mit einer ein einstellbares Ausgangsmoment (md_kup) aufweisenden Antriebseinheit (1) in dem Antriebsstrang des Kraftfahrzeugs angeordnet ist, wobei

   - eine Größe (md_ge_max) bestimmt wird, die das momentan maximal übertragbare Drehmoment des Getriebes (4) repräsentiert, und
   - das Ausgangsmoment (md_kup) der Antriebseinheit (1) auf einen abhängig von der bestimmten Größe (md_ge_max) ermittelten Grenzwert (md_kup_max) derart begrenzt wird, dass der Betrag des Ausgangsmoments (md_kup) der Antriebseinheit (1) mit dem ermittelten Grenzwert (md_kup_max) verglichen wird und in Reaktion auf ein Überschreiten des Grenzwertes das Ausgangsmoment (md_kup) der Antriebseinheit (1) im Sinne einer Unterschreitung des Grenzwertes im Falle einer Antriebsdrehmomentbegrenzung vermindert wird,

   **dadurch gekennzeichnet, dass**

   - in Reaktion auf ein Überschreiten des Grenzwertes das Ausgangsmoment (md_kup) der Antriebseinheit (1) im Sinne einer Unterschreitung des Grenzwertes im Falle einer Schleppmomentbegrenzung erhöht wird.

7. Verfahren nach Anspruch 6, **dadurch gekennzeichnet, dass**

   - im Antriebsstrang weiterhin ein Wandler (3) vorgesehen ist, dessen Momentenverstärkung (mue_wd) bestimmt wird, und der Grenzwert (md_kup_max) abhängig von aktueller Wandlerverstärkung (mue_wd) ermittelt wird, oder
   - im Antriebsstrang weiterhin eine Kupplung vorgesehen ist, dessen Momentenübertragung bestimmt wird, und der Grenzwert (md_kup_max) abhängig von aktueller Momentenübertragung ermittelt wird.

8. Verfahren nach Anspruch 6, **dadurch gekennzeichnet, dass** das Getriebe (4) eine Antriebsseite sowie eine Abtriebsseite und Wirkmittel (9) zur Herstellung einer mechanischen Wirkverbindung zwischen der Antriebs- und Abtriebsseite aufweist, wobei

   - eine den Anpreßdruck zwischen den Wirkmitteln (9) und der Antrieb- und/oder Abtriebseite repräsentierende Anpreßgröße (p_soll; p_ist) erfaßt wird, und
   - aus der erfaßten Anpreßgröße (p_soll; p_ist) die das momentan maximal übertragbare Drehmoment des Getriebes (4) repräsentierende Größe (md_ge_max) bestimmt wird.

9. Verfahren nach Anspruch 6, **dadurch gekennzeichnet, dass** der Betrag des Ausgangsmoments (md_kup) der Antriebseinheit

   (1) mit dem ermittelten Grenzwert (md_kup_max) verglichen wird und in Reaktion auf ein Überschreiten des Grenzwertes das Ausgangsmoment (md_kup) der Antriebseinheit (1) im Sinne einer Unterschreitung des Grenzwertes vermindert (Antriebsmomentbegrenzung) oder erhöht (Schleppmomentbegrenzung) wird.

**Claims**

1. Apparatus for controlling a transmission (4) with a continuously variable transmission ratio in a motor vehicle, the transmission being arranged in the drive line of the motor vehicle together with a drive unit (1) having an adjustable output torque (md_kup), there being provided

   - determining means (41; 45) for determining a variable (md_ge_max) that represents the maximum instantaneous torque that can be transmitted by the transmission (4), and
   - limiting means (30, 11) for limiting the output torque (md_kup) of the drive unit (1) in such a way to a limiting value (md_kup_max) established as a function of the variable (md_ge_max) determined that the output torque (md_kup) of the drive unit (1) can be limited in the direction of positive limiting values to give drive-torque limitation,

   **characterized in that**

   - the limiting means (30, 11) are furthermore configured in such a way that the output torque (md_kup) of the drive unit (1) can be limited in the direction of negative limiting values to give drag-torque limitation.

2. Apparatus according to Claim 1, **characterized in that** the drive line is furthermore provided with a converter (3), which has a torque multiplication (mue_wd) that can be determined, and the establishment of the limiting value (md_kup_max) is activated as a function of the current converter multiplication (mue_wd).

3. Apparatus according to Claim 1, **characterized in that** the drive line is furthermore provided with a coupling that has a torque transmission that can be determined, and the establishment of the limiting value (md_kup_max) is activated as a function of the current torque transmission.

4. Apparatus according to Claim 1, **characterized in that** the transmission (4) has an input side and an output side and operative means (9) for establishing a mechanical operative connection between the input and output sides, and detection means (35; 41) are provided that detect a contact-pressure variable (p_soll; p_ist) representing the contact pressure between the operative means (9) and the input and/or output side, and the determining means (41; 45) are configured in such a way that the variable (md_ge_max) representing the maximum instantaneous torque that can be transmitted by the transmission (4) is determined from the contact-pressure variable (p_soil; p_ist) detected.

5. Apparatus according to Claim 1, **characterized in that** the limiting means (30, 11) are configured in such a way that the absolute value of the output torque (md_kup) of the drive unit (1) is compared with the limiting value (md_kup_max) established, and the output torque (md_kup) of the drive unit (1) is reduced (drive-torque limitation) or increased (drag-torque limitation) in response to the limiting value being exceeded to ensure that it falls below the limiting value.

6. Method for controlling a transmission (4) with a continuously variable transmission ratio in a motor vehicle, the transmission being arranged in the drive line of the motor vehicle together with a drive unit (1) having an adjustable output torque (md_kup),

   - a variable (md_ge_max) representing the maximum instantaneous torque that can be transmitted by the transmission (4) being determined, and
   - the output torque (md_kup) of the drive unit (1) being limited to a limiting value (md_kup_max) established as a function of the variable (md_ge_max) determined by comparing the absolute value of the output torque (md_kup) of the drive unit (1) with the limiting value (md_kup_max) established and, in the case of drive-torque limitation, reducing the output torque (md_kup) of the drive unit (1) in response to the limiting value being exceeded to ensure that it falls below the limiting value,

**characterized in that**,

   - in the case of drag-torque limitation, the output torque (md_kup) of the drive unit (1) is increased in response to the limiting value being exceeded to ensure that it falls below the limiting value.

7. Method according to Claim 6, **characterized in that**

   - the drive line is furthermore provided with a converter (3), the torque multiplication (mue_wd) of which is determined, and the limiting value (md_kup_max) is established as a function of the current converter multiplication (mue_wd), or
   - the drive line is furthermore provided with a coupling, the torque transmission of which is determined, and the limiting value (md_kup_max) is established as a function of the current torque transmission.

8. Method according to Claim 6, **characterized in that** the transmission (4) has an input side and an output side and operative means (9) for establishing a mechanical operative connection between the input and output sides,

   - a contact-pressure variable (p_soil; p_ist) representing the contact pressure between the operative means (9) and the input and/or output side being detected, and
   - the variable (md_ge_max) representing the maximum instantaneous torque that can be transmitted by the transmission (4) being determined from the contact-pressure variable (p_soll; p_ist) detected.

9. Method according to Claim 6, **characterized in that** the absolute value of the output torque (md_kup) of the drive unit (1) is compared with the limiting value (md_kup_max) established, and the output torque (md_kup) of the drive unit (1) is reduced (drive-torque limitation) or increased (drag-torque limitation) in response to the limiting value being exceeded to ensure that it falls below the limiting value.

**Revendications**

1. Dispositif pour commander une transmission à variateur (4) de véhicule automobile selon lequel le variateur ainsi qu'une unité motrice (1) fournissant un couple de sortie (md_kup), réglable, sont montés dans la ligne de transmission du véhicule automobile, comprenant

   - un moyen de détermination (41 ; 45) pour déterminer une grandeur (md_ge_max) représentant le couple maximum instantanément transmissible par le variateur (4), et
   - des moyens de limitation (30, 11) pour limiter le couple de sortie (md_kup) de l'unité motrice (1) à une valeur limite (md_kup_max) dépendant de la grandeur définie (md_ge_max), pour que le couple moteur (md_kup) de l'unité motrice (1) soit limité vers les valeurs positives dans le sens d'une limitation du couple moteur,

   **caractérisé en ce que**
   des moyens de limitation (30, 11) sont conçus en outre pour limiter le couple de sortie (md_kup) de l'unité motrice (1) vers les valeurs négatives dans le sens d'une limitation du couple de poussée.

2. Dispositif selon la revendication 1,
   **caractérisé en ce que**
   la ligne de transmission comporte en outre un convertisseur (3) ayant une certaine amplification de couple (mue_wd) et la détermination de la valeur limite (md_kup_max) est mise en oeuvre en fonction de l'amplification actuelle de la conversion (mue_wd).

3. °)Dispositif selon la revendication 1,
   **caractérisé en ce que**
   la ligne de transmission comporte en outre un embrayage assurant une certaine transmission de couple, et la détermination de la valeur limite (md_kup_max) est faite en fonction de la transmission actuelle du couple.

4. Dispositif selon la revendication 1,
   **caractérisé en ce que**
   le variateur (4) comporte un côté d'entraînement et un côté de sortie ainsi qu'un moyen de transmission (9) pour réaliser une coopération mécanique entre le côté d'entraînement et le côté de sortie ainsi que des moyens de détection (35 ; 41) qui déterminent une grandeur d'application (p_cons ; p_réel) représentant la pression entre le moyen de transmission (9) et le côté d'entrée et/ou le côté de sortie, et des moyens de détermination (41 ; 45) conçus pour qu'à partir de la grandeur d'application détectée (p_cons, p_réel) on puisse déterminer la grandeur (md_ge_max) représentant le couple maximum transmissible instantanément par le variateur (4).

5. Dispositif selon la revendication 1,
   **caractérisé en ce que**
   les moyens de limitation (30, 11) sont réalisés pour comparer l'amplitude du couple de sortie (md_kup) de l'unité motrice (1) à la valeur limite déterminée (md_kup_max), et en réaction à un dépassement de la valeur limite, on diminue le couple de sortie (md_kup) de l'unité motrice dans le sens d'un dépassement vers le bas de la limite (limitation du couple moteur) ou on l'augmente (limitation du couple de poussée).

6. Procédé pour commander un variateur (4) d'un véhicule automobile, le variateur et l'unité motrice (1) fournissant un couple de sortie réglable (md_kup), se plaçant dans la ligne de transmission du véhicule, selon lequel

   - on détermine une grandeur (md_ge_max) représentant le couple maximum instantanément transmissible par le variateur (4), et
   - on réduit le couple de sortie (md_kup) de l'unité motrice (1) à une valeur limite (md_kup_max) obtenue en fonction de la grandeur déterminée (md_ge_max), de façon telle que l'amplitude du couple de sortie (md_kup) de l'unité motrice (1) soit comparée à la valeur limite obtenue (md_kup_max) et qu'en réaction à un dépassement vers le haut de la valeur limite, on diminue le couple de sortie (md_kup) de l'unité motrice (1) dans le sens d'un dépassement vers le bas de la valeur limite dans le cas d'une limitation de couple moteur,

   **caractérisé en ce qu'**
   en réaction à un dépassement de la valeur limite, on augmente le couple de sortie (md_kup) de l'unité motrice (1), dans le sens d'un dépassement vers le bas de la valeur limite en cas d'une limitation du couple de poussée.

7. Procédé selon la revendication 6,
   **caractérisé en ce que**

   - dans la ligne de transmission il est prévu en outre un convertisseur (3) dont on détermine l'amplification de couple (mue_wd), et on détermine la valeur limite (md_kup_max) en fonction de l'amplification actuelle du convertisseur (mue_wd) ou encore
   - il est prévu un embrayage dans la ligne de transmission dont on définit la transmission de couple et on détermine la valeur limite (md_kup-max) en fonction de la transmission actuelle du couple.

**8.** Procédé selon la revendication 6, **caractérisé en ce que** le variateur (4) présente un côté d'entrée et un côté de sortie ainsi qu'un moyen de transmission (9) pour réaliser une coopération mécanique entre le côté d'entrée et le côté de sortie, et

- on saisit une grandeur d'application (p_cons, p_réel) représentant la pression d'application entre le moyen de transmission (9) et le côté d'entrée et/ou de sortie, et
- à partir de la grandeur saisie (p_cons, p_réel) on détermine la grandeur (md_ge_max) représentant le couple maximum instantanément transmissible par le variateur (4).

**9.** Procédé selon la revendication 6, **caractérisé en ce qu'** on compare l'amplitude du couple de sortie (md_kup) de l'unité motrice (1) à la valeur limite obtenue (md_kup_max), et en réaction à un dépassement de la valeur limite, on diminue le couple de sortie (md_kup) de l'unité motrice (1) dans le sens d'un dépassement vers le bas de la valeur limite (limitation de couple moteur) ou on l'augmente (limitation du couple de poussée).

# Fig. 1

# Fig. 2

Fig. 3

Fig. 4